# EUROPÄISCHE PATENTSCHRIFT

(11) **EP 1 390 727 B1**
(45) Veröffentlichungstag und Bekanntmachung des Hinweises auf die Patenterteilung: **31.05.2017**
(21) Anmeldenummer: 02727528.8
(22) Anmeldetag: 05.04.2002
(51) Int. Cl.: B23K 26/03, B29C 65/16, B29C 65/82, G01N 21/88, G01N 21/958, B29C 65/00

(54) **VERFAHREN ZUR KONTROLLE EINER SCHWEISSNAHT ZWISCHEN ZWEI AUS SCHWEISSFÄHIGEM KUNSTSTOFF BESTEHENDEN WERKSTÜCKEN**
METHOD FOR INSPECTING A WELD SEAM BETWEEN TWO WORKPIECES MADE OF WELDABLE PLASTIC
PROCEDE DE CONTROLE D'UN CORDON DE SOUDURE ENTRE DEUX PIECES USINEES EN MATIERE PLASTIQUE SOUDABLE

(30) Priorität: 05.05.2001 DE 10121923; 27.11.2001 DE 10158095
(43) Veröffentlichungstag der Anmeldung: 25.02.2004
(73) Patentinhaber: LPKF Laser & Electronics AG, 30827 Garbsen (DE)
(72) Erfinder: MESSLER, Andreas, 42579 Heiligenhaus (DE)
(74) Vertreter: Hübner, Gerd
(86) Internationale Anmeldenummer: PCT/EP2002/003789
(87) Internationale Veröffentlichungsnummer: WO 2002/090953

(56) Entgegenhaltungen:
- DE-A- 4 311 320
- DE-U- 29 707 777
- FR-A- 2 369 560
- PATENT ABSTRACTS OF JAPAN vol. 1998, no. 09, 31. Juli 1998 (1998-07-31) & JP 10 100259 A (NANNICHI YASUO;SEKISUI CHEM CO LTD), 21. April 1998 (1998-04-21)

## Beschreibung

Die Erfindung richtet sich auf ein Kontrollverfahren der im Oberbegriff des Anspruches 1 angegebenen Art. Die Schweißnaht zwischen den beiden Materialien wird durch eine Laserstrahlung erzeugt, wobei der eine Kunststoff des Werkstücks für diese Laserstrahlung im Wesentlichen transparent und der andere Kunststoff absorbierend sind.

Bei dem bekannten Verfahren dieser Art verwendete man zur Kontrolle ein Pyrometer, welches auf die von der hergestellten Schweißnaht ausgehende Wärmestrahlung anspricht. Damit eine möglichst hohe Temperatur das Pyrometer erreicht, muss die Messung während des Schweißens erfolgen. Außerdem muss der Werkstoff des einen Kunststoffteils für die Wärmestrahlung durchlässig sein.

Zum Verschweißen von Kunststoffen hat sich die Verwendung der Laserstrahlung sehr bewährt. Es gibt drei Schweißverfahren für die Laserstrahlung, nämlich das so genannte "Bahnschweißen", das "Simultanschweißen" und das "Quasi-Simultanschweißen". Die pyrometrische Kontrolle der Schweißnaht ist nur bei dem Bahnschweißen möglich und nicht bei dem Simultanschweißen oder Quasi-Simultanschweißen anwendbar, obwohl Letzteres einen Zeitvorteil gegenüber dem Bahnschweißen bringt. Eine Kontrolle der Schweißgüte konnte bei einem, im Simultanverfahren erzeugten Schweißprodukt nur indirekt, über Dimensionsänderungen des Werkstücks erfolgen und war nur bei bestimmten Geometrien des Werkstücks überhaupt anwendbar. Die Güte einer Simultan- oder Quasi-Simultanschweißung konnte im Allgemeinen nicht kontrolliert werden.

Die beim Bahnschweißen mögliche pyrometrische Schweißkontrolle ist im Übrigen fehlerhaft und nur dann anwendbar, wenn das Material des einen Kunststoffteils nicht nur für die Laserstrahlung, sondern auch für die Wärmestrahlung durchlüssig ist. Daher ist in vielen Fällen eine Schweißkontrolle beim fertigen Werkstück gar nicht möglich.

Bei einem bekannten Verfahren anderer Art (DE 196 03 675 A1) erfolgt die Schweißverbindung durch ein Berührungsschweißen von zwei übereinander liegenden Kunststofffolien, aus denen ein Beutel hergestellt werden soll. Jede der beiden Kunststofffolien besteht in sich aus zwei Schichten, nämlich aus einer durchsichtigen, nicht schmelzenden äußeren Trägerschicht und einer inneren eingefärbten Siegelschicht. Durch zwei gegeneinander drückende beheizte Siegelbacken werden die einander berührenden Siegelschichten der beiden Folien miteinander verschweißt. Durch die Schweißverbindung an den farbigen Siegelschichten ändert sich die Helligkeit der Schweißnähte gegenüber jenen Stellen, die nicht oder unzureichend verschweißt worden sind. Diese Helligkeitsunterschiede werden in einem Durchlichtverfahren ermittelt und zur Kontrolle der Qualität der Schweißnähte benutzt. Die beiden Folien werden mit einer Lichtquelle im Bereich der Schweißnaht durchleuchtet und das auf der anderen Seite der Folien austretende Licht wird von einem Sensor erfasst und ausgewertet. Dieses bekannte Verfahren ist auf durch Laserstrahlung erzeugte Schweißnähte nicht anwendbar, weil der eine Kunststoffteil dieses Schweißprodukts absorbierend und damit lichtundurchlässig ist.

Bei einem weiteren Verfahren zur Kontrolle von Schweißnähten an aus zwei Folien hergestellten Beuteln, in die auch gleich Schüttgut eingefüllt wird (US 5,260,766 A). ist es bekannt, Laserlicht über eine Vielzahl von Glasfasern einem aus transparentem Material bestehenden Heizwerkzeug zuzuführen. Dadurch soll das Licht bis zu der Berührungsstelle dieses Heizwerkzeugs mit einem Gegenwerkzeug gelangen, zwischen denen die beiden Folien liegen und verschweißt werden. Das von dieser Berührungsstelle reflektierte Licht muss das transparente Material des Heizwerkzeugs durchqueren, um in eine Kamera zu gelangen, wo es ausgewertet wird, ob Partikel des Füllmaterials in der Schweißnaht eingeschlossen sind. Daraus soll auf die Qualität der Schweißnaht geschlossen werden. Dieses Verfahren ist nur bei dünnen ebenen Folien anwendbar, wo lineare Schweißnähte entstehen und erfordert ein transparentes Schweißwerkzeug. Dieses Verfahren ist nicht aus das Laserschweißen von räumlichen Kunststoffteilen mit zwei- oder dreidimensional verlaufenden Schweißnähten anwendbar, insbesondere wenn zwei Kunststoffe mit unterschiedlichen optischen und/oder mechanischen Eigenschaften miteinander verschweißt werden sollen.

Ferner ist es bekannt (DE 298 16 401 U1) mittels einer Durchleuchtungstechnik Risse in einer durch Schweißen erzeugten Überlappungs-Stoßnaht von Blechen zu detektieren. Dazu wird die Schweißnaht zwischen einem Lichtsender und einem Lichtempfänger gebracht. Um die Messgenauigkeit zu erhöhen, soll diese Durchleuchtungstechnik in einer Flüssigkeit mit extrem niedriger Viskosität erfolgen. Dieses Verfahren ist zur Kontrolle von Schweißnähten, die durch Laserstrahlung zwischen zwei Kunststoffteilen entstehen, von denen eines (absorbierend ist, nicht geeignet.

Schließlich ist es bekannt (JP 10-100259 A, PATENT ABSTRACT OF JAPAN, vol. 1998, Nr. 09, 31. Juli 1998) zwei gleichartige Polyethylenmaterialien mit einer breitbandigen Infrarotstrahlung zu bestrahlen. Solange die entstehende Schweißnaht im flüssigen Zustand sich befindet, wird die von der Flüssigkeit reflektierte oder durch die Flüssigkeit hindurchgehende Infrarotstrahlung von optischen Mitteln erfasst und ausgewertet. Eine Laserstrahlung wird nicht verwendet. Eine zur Infrarotstrahlung hinzukommende Kontrollstrahlung wird nicht benutzt, weshalb es nicht darauf ankommt, ob das eine Polyethylenmaterial für diese Kontrollstrahlung transparent ist.

Die nachveröffentlichte EP 1 304 560 A1 offenbart ein Verfahren zur Qualitätskontrolle von Kunststoffschweißnähten, bei der die zu untersuchende Nahtstelle der Schweißnaht mit einem elektromagnetischen Diagnosestrahl beleuchtet wird. Dazu wird der für die Herstellung der Kunststoffschweißnaht verwendete Laserstrahl direkt zur Reflexionsdiagnostik herangezogen.

Aus der US 5 449 882 A ist eine Spiegel-basiertes Laserbearbeitungssystem zum Laserschweißen mit einer Temperatur- und Positionskontrolle des sich bewegenden Laserspots bekannt. Ein dafür eingesetzter Sensorkopf ist mit einem nicht vom Laser durchsetzten Schutzfenster, einem Filter zur Dämpfung des vom behandelten Objekt gestreuten Infrarotlichtes, einem schmalbandigen Infrarot-Filter zum Durchlass lediglich der thermischen Komponenten des gestreuten Infrarotlichtes und Photodetektoren ausgerüstet, die die Intensität des empfangenen lichtes in entsprechende elektrische Signale umwandeln. Diese tragen die Information über die räumliche Temperaturverteilung in der Nähe des Schweißpunktes.

Ferner ist durch offenkundige Vorbenutzung seitens des Fraunhofer Instituts Lasertechnik, D-52074 Aachen im Jahr 2000 ein fasergekoppeltes Dioden-Lasersystem mit optionalem Pyrometer bekannt, bei dem eine Temperatur- und Leistungssensorik integriert ist, jedoch explizit keine Kontrolle der Schweißnaht stattfindet.

Der Erfindung liegt die Aufgabe zugrunde, ein zuverlässiges Kontrollverfahren der im Oberbegriff des Anspruches 1 angegebenen Art zu entwickeln, welche die vorerwähnten Nachteile des Standes der Technik vermeidet. Dies wird erfindungsgemäß durch die im Kennzeichen des Anspruches 1 angegebenen Maßnahmen erreicht, denen folgende besondere Bedeutung zukommt.

Im Inneren des Schweißprodukts erfolgen Reflektionen der Kontrollstrahlung an allen Materialgrenzflächen zwischen den beiden Kunststoffteilen des Werkstücks, wobei bei der Erfindung die von der bereits verfestigten fertigen Schweißnaht ausgehenden Reflektionen der Kontrollstrahlung ausgewertet werden. Sollte die Schweißnaht einmal eine unbeabsichtigte Lücke aufweisen, bei der keine ordentliche oder gar keine Verschweißung stattgefunden hat, so werden die von dieser Stelle ausgehenden Reflektionen selbstverständlich genauso detektiert und ausgewertet. Die aus dem Werkstück austretende Strahlung wird in signifikanter Weise verändert, wenn die erzeugte Schweißnaht fehlerhaft ist. Daraus kann eindeutig auf die Güte der Schweißnaht geschlossen werden. Ein Auswerter erfasst die aus dem fertig geschweißten Werkstück austretende Kontrollstrahlung und löst entsprechende Reaktionen an einem Überwachungsgerät aus, wenn sich aufgrund einer fehlerhaften Naht Störungen der gemessenen Kontrollstrahlung ergeben.

Die Erfindung verwendet zur Kontrolle eine zusätzliche, von der Laserstrahlung völlig unabhängige Strahlung. Es genügt dabei zu beachten, für die Kontrollstrahlung jene elektromagnetische Frequenz zu wählen, bei welcher mindestens einer der beiden Kunststoffteile transparent ist. Diese Maßnahmen lassen sich dann nicht nur während des Schweißvorgangs selbst sondern auch nachträglich, am fertigen Schweißprodukt anwenden. Dieses Kontrollverfahren könnte auch dann benutzt werden, wenn die Schweißnaht nicht durch Laserstrahlung sondern auf andere Weise erzeugt worden ist.

Weitere Maßnahmen und Vorteile der Erfindung ergeben sich aus der nachfolgenden Beschreibung und den Zeichnungen. In den Zeichnungen ist die Erfindung in mehreren Ausführungsbeispielen dargestellt. Es zeigen:
- Fig. 1,: in schematischer, perspektivischer Darstellung, ein Beispiel für ein Schweißprodukt, nämlich einen in ein zweischichtiges Werkstück integrierten Transponder,
- Fig. 2: ein nicht erfindungsgemäßes fotometrisches Kontrollverfahren für die Güte einer erzeugten Schweißnaht,
- Fig. 3: das Wirkprinzip des in Fig. 2 praktizierten Verfahrens, wenn keine Schweißnaht zwischen den beiden Kunststoffteilen des Werkstücks vorliegt,
- Fig. 4,: in einer zur Fig. 3 analogen Darstellung, die Verhältnisse, wenn zwischen den beiden Kunststoffteilen sich eine Schweißnaht ausgebildet hat,
- Fig. 5,: schematisch, einen Längsschnitt durch eine Vorrichtung für ein Ausführungsbeispiel des erfindungsgemäßen Kontrollverfahrens und
- Fig. 6,: in Vergrößerung, ein Teilstück des in Fig. 5 angedeuteten Werkstücks, anhand dem die besondere Wirkungsweise dieses Verfahrens erläutert werden soll.

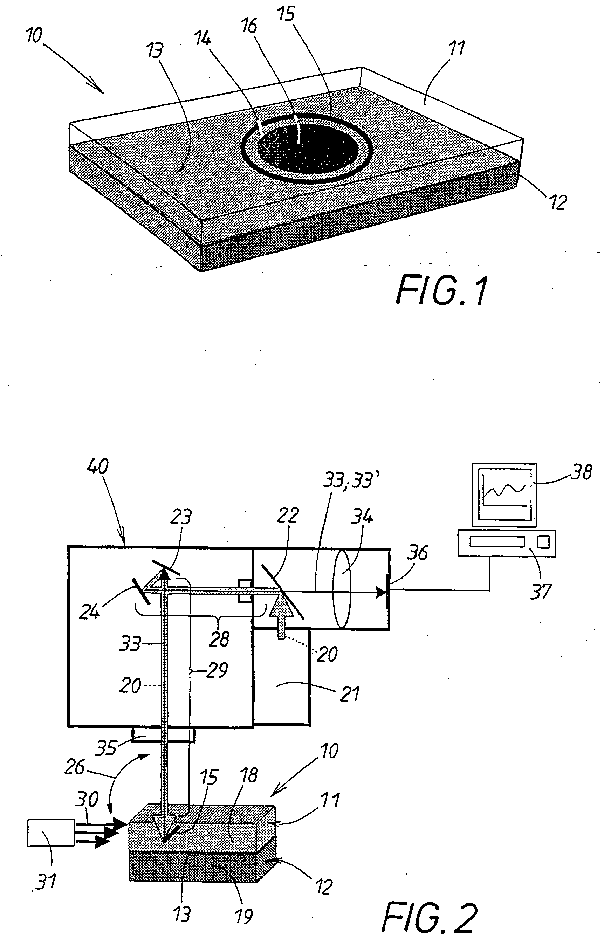

Das in Fig. 2 gezeigte Werkstück 10 besteht aus zwei plattenförmigen Kunststoffteilen 11, 12, die wenigstens stellenweise eine Berührungsfläche 13 zwischen sich haben, an welcher eine Schweißnaht 15 entstehen soll. Ein solches fertiges Schweißprodukt ist beispielhaft in Fig. 1 veranschaulicht.

Zur besseren Erkennbarkeit ist in Fig. 1 der obere Kunststoffteil 11 durchsichtig gezeichnet und lässt daher einen Blick auf dessen Berührungsfläche 13 mit dem darunter liegenden anderen Kunststoffteil 12 zu. In diesem zweiten Kunststoffteil 12 soll sich eine Aufnahme 14 für einen plättchenförmigen Transponder 16 befinden, der in der Lage ist, elektronische Daten zu empfangen, zu speichern und zu senden. Ein solcher Transponder ist temperaturempfindlich und muss vor Umwelteinflüssen, wie Feuchtigkeit, geschützt werden. Der eingelegte Transponder 16 wird durch eine hier in sich geschlossene ringartige Schweißnaht 15 umgrenzt, welche die beiden Kunststofflagen 11, 12 im Bereich der Berührungsfläche 13 miteinander verbindet. Diese Schweißnaht 15 sorgt für einen mediendichten Einschluss des Transponders 16 im Inneren des Werkstücks 10.

Die Fig. 2 zeigt ein nicht erfindungsgemäßes Verfahren sowohl zur Herstellung als auch zur Kontrolle einer solchen Schweißnaht 15. Dazu verwendet man ein kombiniertes Gerät 40, welches zur Erzeugung und Leitung eines punktschraffiert veranschaulichten Laserstrahls 20 dient. Der Laserstrahl wird in einem Diodenlasermodul 21 erzeugt. Der Laserstrahl 20 trifft auf einen Umlenkspiegel 22, der für eine weitere, besondere elektromagnetische Strahlung 30 durchlässig ist, deren Entstehung noch näher beschrieben wird. Die Laserstrahlung 20 gelangt, wie der Strahlengang in Fig. 2 zeigt, auf zwei bewegliche Strahlenablenkspiegel 23, 24.

Diese beiden Spiegel werden in definierter Weise bewegt, um den Laserstrahl 20 durch ein Theta-Objektiv 35 auf das Werkstück 10 zu lenken. Mit den beiden spiegeln 23, 24 lässt sich die Schweißnaht 15 gemäß dem eingangs erwähnten Simultanschweißen erzeugen, welches besonders schnell und preiswert ausführbar ist. Die beiden Kunststoffteile 11, 12 des Werkstücks haben in diesem Fall folgende Eigenschaften.

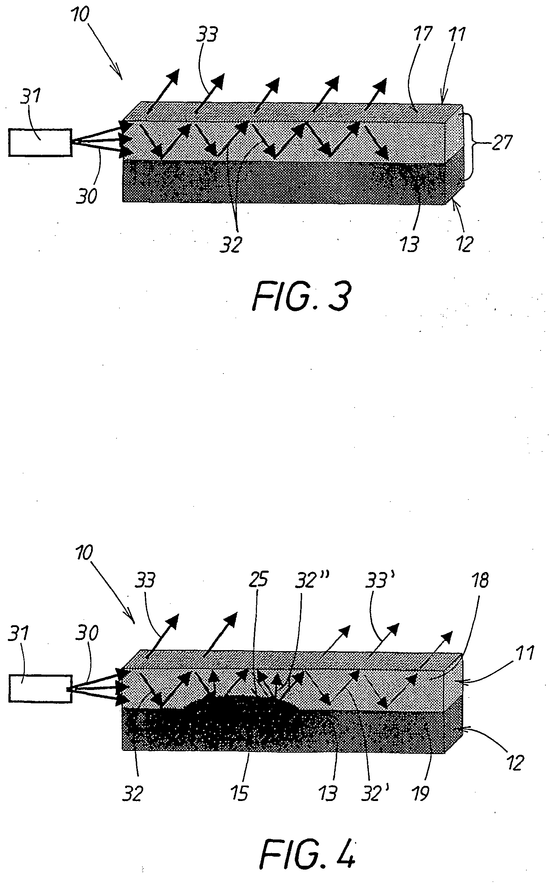

Das Material 18 des ersten Kunststoffteils 11 ist für die Laserstrahlung 20 im wesentlichen transparent, aber das Material 19 des zweiten Kunststoffteils 12 absorbiert den Laserstrahl 20. Der transparente Kunststoff kann aus amorphem Material bestehen, und dadurch wenig streuen. Der Kunststoff 18 kann aber auch teilkristallin sein, d.h. stark streuend wirken. Im Bereich der Berührungsfläche 13 kommt es zu einer stellenweisen Verflüssigung der beiden Kunststoffmaterialien 18, 19. Was dabei im Werkstück 10 geschieht, ist in der Vergrößerung von Fig. 4 zu erkennen. In Fig. 4 sieht man den Querschnitt der entstehenden Schweißnaht 15, die aus einem Werkstoffgemisch der beiden Ausgangsmaterialien 18, 19 besteht. Gegenüber der ursprünglichen Berührungsfläche 13 entsteht an der Schweißnaht 15, wie aus Fig. 4 hervorgeht, noch eine weitere Grenzfläche 25 gegenüber beiden, sie einschließenden unvermischt gebliebenen Kunststoffmaterialien 18, 19.

Neben dem Werkstück 10 befindet sich eine Quelle 31 für eine von der Laserstrahlung 20 unabhängige elektromagnetische Strahlung 30, die aus noch näher ersichtlichen Gründen nachfolgend kurz "Kontrollstrahlung" genannt werden soll. Als Kontrollstrahlung 30 kann hierbei ebenfalls eine Laserstrahlung, aber auch eine andere elektromagnetische Strahlung dienen wie ultraviolette oder Infrarotstrahlung oder auch sichtbares Licht. Die Auswahl ist hier auch von den verwendeten Materialien abhängig. Diese Kontrollstrahlung 30 wird, wie Fig. 2 verdeutlicht, in einem geeigneten Winkel 26 gegenüber dem aus dem Kombinationsgerät 40 kommenden Laserstrahl 20 in das Werkstück 20 eingeleitet. Im vorliegenden Fall soll das Kunststoffmaterial 18 der oberen Schicht 11 auch für die Kontrollstrahlung 30 transparent sein. Was dann passiert, soll anhand der Fig. 3 einerseits und Fig. 4 andererseits näher erläutert werden.

Die Fig. 3 zeigt jene Verhältnisse im Werkstück 10, wenn es, im extremen Fall, an ihrer Berührungsfläche 13 zu keiner Verschweißung der Kunststoffteile 11, 12 kommt. Im Inneren 27 des Werkstücks 10 führt die Kontrollstrahlung 30 eine mehrfache Reflektion 32 zwischen der Berührungsfläche 13 und der Außenfläche 17 aus. Ein Teil der auf die Außenfläche 17 treffenden Reflektionsstrahlung 32 tritt, wie die Pfeile 33 in Fig. 3 zeigen, heraus und wird vom Theta-Objektiv 35 des Geräts 40 von Fig. 2 gesammelt. Wie Fig. 2 verdeutlicht, verläuft diese austretende Kontrollstrahlung 33 im Gerät 40 auf den mit 28, 29 gekennzeichneten Teilstücken des zur Leitung der Laserstrahlung 20 dienenden optischen Wegs. Die austretende Kontrollstrahlung wird aber, wegen dem für diese Strahlung durchlässigen Umlenkspiegel 22 hindurchgeleitet und gelangt über eine Linse 34 auf einen Sensor 36, der an einen Auswerter 37 angeschlossen ist. Der Auswerter 37 erfasst die gemessene Kontrollstrahlung 33 und löst, in Abhängigkeit davon in nachgeschalteten Geräten 38 die gewünschten Reaktionen aus. Im vorliegenden Fall handelt es sich um einen Monitor 38, der auf seinem Bildschirm die Qualität der im Werkstück 10 entstandenen Schweißnaht 15 wiedergibt.

Wenn an der erfassten Stelle eine Schweißnaht 15 im Werkstück 10 vorliegt, dann ergeben sich, in Abhängigkeit von ihrer Beschaffenheit, die aus Fig. 4 ersichtlichen besonderen Verhältnisse. Bezogen auf die Einfallrichtung der Kontrollstrahlung 30 ergeben sich vor der Schweißnaht 15 zwar die bereits beschriebenen Rejektionen 32 und Austritte 33 der Kontrollstrahlung, diese weichen aber gegenüber denjenigen 32', 33' hinter der Schweißnaht 15 wesentlich ab. Dazu trägt auch die raue Grenzfläche 25 im Bereich der Schweißnaht 15 bei, wo es zu einer diffusen Streuung 32" kommt.

Das hat zur Folge, dass es an der vom Gerät 40 in Fig. 2 erfassen Stelle zu einer summativen Austrittsstrahlung 33' kommt, die sich bei Fig. 4 erheblich von jener unterscheidet, wie sie sich bei der in Fig. 3 ergebenden schweißnahtfreien Stelle im Werkstück 10 ergibt. Es kommt im transparenten Kunststoff 11 und gegebenenfalls auch im Bereich der Schweißnaht 15 zu mehrfachen Reflektionen. Durch Einstellung der Optik lässt sich der interessierende Bereich der Austrittsstrahlung 33' erfassen. Dazu dient ein Sensor 36, dem ein Auswerter 37 nachgeschaltet ist. Das Messergebnis wird in einem Anzeigegerät 38 kundbar gemacht. Die Anwendung des erfindungsgemäßen Verfahrens zeigte, dass auch kleine Abweichungen vom Sollwert in der Ausbildung der Schweißnaht 15 eindeutig erfasst werden. Daher können Werkstücke mit noch tolerierbaren Schweißnähten 15 deutlich von solchen unterschieden werden, die als Ausschuss anzusehen sind.

Das vorgenannte Verfahren ist nicht nur bei Werkstücken 10 anwendbar, wo die Laser-Schweißnaht durch Laserstrahlung entsteht, sondern auch bei auf beliebig anderer Weise erzeugten Schweißnähten, z.B. solchen, die durch Reibschweißen oder durch Ultraschall-Schweißen erzeugt wurden. Außerdem kann das erfindungsgemäße Verfahren zeitlich unabhängig vom Schweißvorgang erzeugt werden, weil, im Gegensatz zum Stand der Technik nicht die von der Schweißnaht ausgehende Wärmestrahlung zur Messung genutzt wird. Bei diesem Verfahren kommt, wie erläutert wurde, eine davon völlig unabhängige Kontrollstrahlung 30 zum Einsatz, die jederzeit angewendet werden kann. Die Kontrollstrahlung 30 kann von mehreren Seiten aus auf das Werkstück 10 einwirken. Man kann daher auch mehrere Strahlungsquellen 31 verwenden.

In Abhängigkeit von der Qualität der Schweißnaht 15 fällt die aus dem Werkstück 10 austretende Strahlung 33 unterschiedlich aus. Je nach ermittelter Qualität können dann entsprechende Reaktionen von einer Kontrollperson oder von einem automatischen Überwachungsgerät ausgeführt werden.

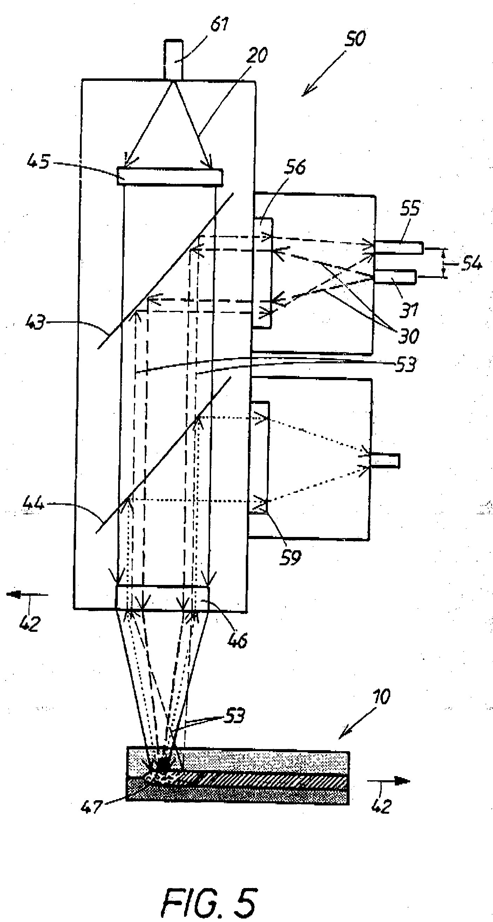

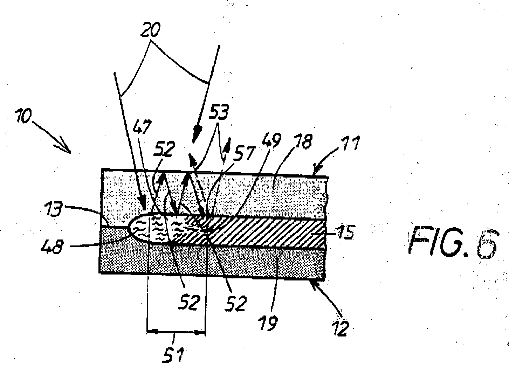

Fig. 5 zeigt einen Bearbeitungskopf 50, der relativ gegenüber einem Werkstück 10 im Sinne der beiden Pfeile 42 bewegbar ist. Ein nicht näher gezeigter Diodenmodul erzeugt einen Laserstrahl 20, der über einen Eingang 61, nämlich einen Lichtwellenleiter, in den Bearbeitungskopf 50 gelangt und in Fig. 5 durch ausgezogene Pfeile verdeutlicht ist. Die Laserstrahlung 20 wird von einer Linse 45 parallel gerichtet, durchsetzt zwei Spiegel 43, 44 und wird von einem Kollimator 46 gebündelt und an einer definierten Stelle bei 47 fokussiert. Der Focus 47 befindet sich dann, wie die Vergrößerung von Fig. 6 zeigt, an der Berührungsfläche 13 zwischen den beiden bereits im Zusammenhang mit Fig. 3 und 4 beschriebenen Kunststoffteilen 11, 12, von denen der obere aus einem Kunststoffmaterial 18 besteht, welches transparent und entweder wenig oder stark streuend ist. Entscheidend ist, dass der Kunststoffteil 12 aus einem Kunststoffmaterial 19 besteht, welches die Laserstrahlung 20 absorbiert. Die Wellenlänge dieser Laserstrahlung 20 kann bei ca. 800 bis 940 nm liegen.

Im Bereich des Focus 47 entsteht eine Schmelze 48 aus beiden Materialien 18, 19. Während der Relativbewegung 42 des Werkstücks 10 gegenüber dem Bearbeitungskopf 50 wandert der Focus 47 weiter und es kommt zu einer allmählichen Verfestigung 49 der Schmelze. So entsteht die Schweißnaht 15. Zugleich wird das Laserlicht 20 im Inneren des transparenten Materials 18 vom ersten Kunststoffteil 11, in Analogie zu Fig. 2 bzw. 4 gestreut. Die Streustrahlung ist durch ausgezogene Pfeile 52 veranschaulicht. Durch mehrfache Reflektionen gelangt die Streustrahlung 52 auch bis zu einer bestimmten Kontrollstelle 57, die in einem definierten Abstand 51 vom Focus 47 entfernt ist. Nach einer mehrfachen Streuung 52 entsteht eine Austrittsstrahlung 53, die durch eine feine Strichelung in Fig. 5 und 6 verdeutlicht ist. Die von der Kontrollstelle 57 ausgehende Austrittsstrahlung 53 wird vom optischen Bauteil 46 erfasst und parallel gerichtet. Die Austrittsstrahlung 53 durchsetzt den unteren Spiegel 44, wird aber am oberen Spiegel 43 reflektiert und gelangt schließlich in einen Detektor 55. Dieser Detektor 55 befindet sich in einem Versatz 54 gegenüber einer den optischen Strahlengang bestimmenden, nicht näher gezeigten zentralen Achse. Dieser Versatz 54 berücksichtigt den erwähnten Abstand 51 der beobachteten Kontrollstelle 57 von der Schmelzstelle 48. Am Detektor passiert das, was bereits im Zusammenhang mit dem nicht erfindungsgemäßen Ausführungsbeispiel im Anschluss an den Sensor 36 beschrieben worden ist.

Der Bearbeitungskopf 50 besitzt außerdem noch eine Strahlungsquelle 31 für eine vom Laserlicht unabhängige elektromagnetische Kontrollstrahlung 30, deren Wellenlänge z.B. bei 750 bis 800 nm liegt. Damit ist es mit diesem Bearbeitungskopf 50 möglich alternativ oder zusätzlich zu der vorbeschriebenen Prüfung mittels der Austrittsstrahlung 53 der Schweißstrahlung 20 auch eine davon unabhängige Kontrolle durchzuführen. Diese Prüfung kann dann ebenfalls über einen Detektor 55 erfolgen, der die vorbeschriebene Kontrollstelle 57 im Werkstück 10 erfasst. Zur Parallelrichtung bzw. Fokussierung der Austrittsstrahlung 53 bzw. der Kontrollstrahlung 30 dient ein optischer Bauteil 56.

Die im Bearbeitungskopf 50 integrierten, beschriebenen Bauteile können auch in Einzelgeräten untergebracht sein. Diese Einzelgeräte werden dann gruppenweise nebeneinander angeordnet.

### Bezugszeichenliste :

- 10: Werkstück
- 11: erster Kunststoffteil von 10
- 12: zweiter Kunststoffteil von 10
- 13: Berührungsfläche zwischen 11, 12
- 14: Aufnahme in 12 für 16
- 15: Schweißnaht zwischen 11, 12
- 16: Transponder
- 17: Außenfläche von 11
- 18: erstes Kunststoffmaterial von 11
- 19: zweites Kunststoffmaterial von 12
- 20: Laserstrahl, Laserstrahlung
- 21: Diodenmodul für 10
- 22: Umlenkspiegel für 21 bzw. Durchlässigkeits-Spiegel für 33
- 23: erster Strahlen-Umlenkspiegel für 20, 33
- 24: zweiter Strahlen-Umlenkspiegel für 20, 33
- 25: raue Grenzfläche von 15 gegenüber 11 (Fig. 4)
- 26: Winkel zwischen 20, 33 (Fig. 2)
- 27: Inneres von 10
- 28: erstes Teilstück von 20 in 40
- 29: zweites Teilstück von 20 in 40
- 30: elektromagnetische Strahlung, Kontrollstrahlung
- 31: Strahlungsquelle für 30
- 32: Reflektion von 30 in 27 (ohne Schweißnaht)
- 32': Reflektion der Kontrollstrahlung hinter der Schweißnaht 15
- 32": diffuse Streuung an 25 von 15
- 33: Austrittsstrahlung aus 17 (ohne Schweißnaht)
- 33': Austrittsstrahlung bei einer Schweißnaht (Fig. 4)
- 34: Linse für 33
- 35: Theta-Objektiv von 40
- 36: Sensor für 33
- 37: Auswerter für 33
- 38: Anzeigegerät, Monitor
- 40: kombiniertes Gerät
- 42: Relativbewegung von 50 gegenüber 10 (Fig. 6)
- 43: oberer halbdurchlässiger Spiegel
- 44: unterer halbdurchlässiger Spiegel
- 45: Linse, optischer Bauteil
- 46: Kollimator, optischer Bauteil
- 47: Schweißstelle, Focus von 20 in 10
- 48: Schmelze aus 18, 19 (Fig. 7)
- 49: Verfestigung von 48
- 50: Bearbeitungskopf (Fig. 6)
- 51: Abstand zwischen 47, 57 (Fig. 7)
- 52: Streustrahlung in 18 (Fig. 7)
- 53: Austrittsstrahlung aus 18 (Fig. 6, 7)
- 54: Versatz von 55
- 55: Detektor für 53
- 56: optischer Bauteil für 30, 53
- 57: Kontrollstelle an 15
- 59: optischer Bauteil
- 61: Eingang für 20 (Fig. 6)

## Patentansprüche

1. Verfahren zur Kontrolle einer Schweißnaht (15) zwischen zwei aus schweißfähigem Material (18, 19) bestehenden Kunststoffteilen (11, 12) eines Werkstücks (10),
wobei die Schweißnaht (15) mittels einer Laserstrahlung (20) erzeugt wird,
wobei für die Laserstrahlung (20) der eine Kunststoffteil (11) des Werkstücks (10) im Wesentlichen transparent, aber der andere Kunststoffteil (12) absorbierend sind, und
wobei die Güte der dabei hergestellten Schweißnaht (15) auf optischem Wege ermittelt wird,
**dadurch gekennzeichnet,**
- **dass** eine zusätzliche, von der Laserstrahlung (20) unabhängige elektromagnetische Kontrollstrahlung (30) verwendet wird,
- **dass** einer der beiden Kunststoffteile (11, 12) vom Werkstück (10) auch für die Kontrollstrahlung (30) transparent ist,
- **dass** die Kontrollstrahlung (30) ins Innere dieses transparenten Kunststoffs (11) eingebracht wird und dabei auf die bereits verfestigte Schweißnaht (15) trifft, wobei die Einstrahlrichtung der Kontrollstrahlung (30) auf das Werkstück koaxial zur Einfallsrichtung des Laserstrahls (20) erfolgt und wobei die Kontrollstrahlung (30) sowohl an den Berührungsflächen (13) zwischen den Kunststoffteilen (11, 12) als auch an der Grenzfläche (25) der Schweißnaht (15) reflektiert (32; 52) wird und teilweise aus dem Werkstück (10) wieder austritt (33; 33'; 53),
- **dass** die sich ergebende Austrittsstrahlung gemessen wird,
- **dass** beim Messen jene Austrittsstrahlung, die von einer bereits verfestigten (49) Stelle (57) der entstandenen Schweißnaht (15) ausgeht, erfasst und der Messvorgang einem Auswerter (37) zugeführt wird,
- **dass** die aus dem Werkstück (10) austretende Kontrollstrahlung (33'; 53) auf ihrem Weg bis zur Messstelle (36; 55) auf einem Teilstück jenes optischen Weges (23, 24, 35, 44, 46) läuft, auf welchem in umgekehrter Richtung das Laserlicht (20) bis zur Schweißstelle (15; 47) im Werkstück (10) geführt wird, und
- **dass** die durch eine fehlende Naht (15) sich ergebende Störung der gemessenen Austrittsstrahlung (33'; 53) vom Auswerter (37) festgelegt wird und Reaktionen (38) zur Kundbarmachung des Messergebnisses an einem Anzeigegerät (38) auslöst.

## Claims

1. Method for inspecting a weld seam (15) between two plastic parts (11, 12) of a workpiece (10) that are made of weldable material (18, 19),
wherein the weld seam (15) is produced by a laser radiation (20),
wherein one (11) of the plastic parts of the workpiece (10) is essentially transparent to the laser radiation (20), whereas the other plastic part (12) absorbs it, and
wherein the quality of the weld seam (15) produced in this way is determined by optical means,
**characterized in**
- **that** an additional electromagnetic inspection radiation (30) is used that is independent of the laser radiation (20);
- **that** one of the two plastic parts (11, 12) of the workpiece (10) is also transparent to the inspection radiation (30);
- **that** the inspection radiation (30) is introduced into the interior of this transparent plastic part (11) and hits the already solidified weld seam (15), wherein the beam direction of the inspection radiation (30) onto the workpiece is coaxial to the direction of incidence of the laser beam (20), and wherein the inspection radiation (30) is reflected (32; 52) both at the contact surfaces (13) between the plastic parts (11, 12) and at the interface (25) of the weld seam (15) and partly exits (33, 33'; 53) the workpiece (10);
- **that** the resulting exit radiation is measured;
- **that**, during said measurement, only the exit radiation reflected by an already solidified (49) point (57) of the produced weld seam (15) is detected, and the measuring process is transmitted to an evaluation unit (37);
- **that** the inspection radiation (33'; 53) exiting the workpiece (10) travels to the measuring point (36; 55) along a segment (29, 28) of the same optical path (23, 24, 35, 44, 46) that the laser light (20) follows in the opposite direction to the weld (15; 47) in the workpiece (10); and
- **that** the disturbance of the measured exit radiation (33'; 53) caused by a missing weld (15) is detected by the evaluation unit (37), which triggers reactions (38) so that the measuring result is displayed on a display device (38).

## Revendications

1. Procédé de contrôle d'un cordon de soudure (15) entre deux parties de matière plastique (11, 12) constituées d'un matériau soudable (18, 19) d'une pièce (10),
dans lequel le cordon de soudure (15) est produit au moyen d'un rayonnement laser (20),
dans lequel, pour le rayonnement laser (20), la première partie de matière plastique (11) de la pièce (10) est sensiblement transparente, mais l'autre partie de matière plastique (12) est absorbante, et
dans lequel la qualité du cordon de soudure (15) ainsi élaboré est déterminée par voie optique,
**caractérisé en ce que**
- l'on utilise un rayonnement de contrôle électromagnétique supplémentaire (30) indépendant du rayonnement laser (20),
- l'une des deux parties de matière plastique (11, 12) de la pièce (10) est également transparente pour le rayonnement de contrôle (30),
- le rayonnement de contrôle (30) est implanté à l'intérieur de cette matière plastique transparente (11) et rencontre en l'occurrence le cordon de soudure déjà solidifié (15), dans lequel la direction d'irradiation du rayonnement de contrôle (30) sur la pièce se fait coaxialement à la direction d'incidence du rayon laser (20) et dans lequel le rayonnement de contrôle (30) est réfléchi autant sur les surfaces de contact (13) entre les parties de matière plastique (11, 12) qu'à l'interface (25) du cordon de soudure (15) et ressort (33; 33'; 53) en partie de la pièce (10),
- le rayonnement de sortie qui se produit est mesuré,
- lors de la mesure, ce rayonnement de sortie, qui ressort d'un point (57) déjà solidifié (49) du cordon de soudure produit (15), est déterminé et le processus de mesure est envoyé à un dispositif d'évaluation (37),
- le rayonnement de contrôle (33'; 53) sortant de la pièce (10) s'écoule sur son trajet jusqu'au point de mesure (36; 55) sur une fraction du trajet optique (23, 24, 35, 44, 46) sur lequel le rayon laser (20) est acheminé au point de soudure (15; 47) dans la pièce (10) en sens inverse et
- la perturbation du rayonnement de sortie mesuré (33'; 53) qui se produit en raison d'un cordon manquant (15) est établie par le dispositif d'évaluation (37) et déclenche des réactions (38) pour matérialiser le résultat de mesure sur un appareil d'affichage (38).
